# EUROPÄISCHE PATENTANMELDUNG

(11) **EP 0 819 877 A2**
(43) Veröffentlichungstag der Anmeldung: **21.01.1998**
(21) Anmeldenummer: 97111577.9
(22) Anmeldetag: 09.07.1997
(51) Int. Cl.: F16K 31/60

(54) **Betätigungseinrichtung für ein Einhebelmischventil**

(30) Priorität: 18.07.1996 DE 19628937
(71) Anmelder: FRIEDRICH GROHE AKTIENGESELLSCHAFT, D-58675 Hemer (DE)
(72) Erfinder: Humpert, Jürgen, 58675 Hemer (DE); Gransow, Eckhard, 58730 Fröndenberg (DE); Dickel, Harald, 58644 Iserlohn (DE)

(57) **Zusammenfassung**

Bei einer Betätigungseinrichtung für ein Einhebelmischventil mit einem in zwei Freiheitsgraden bewegbaren Handgriff, der mit einem Ventilglied zur Bestimmung des Mischungsverhältnisses und der Gesamtdurchflußmenge über einen Stellhebel verbunden ist, wobei Anschlagmittel zur Bewegungsbegrenzung des Ventilglieds vorgesehen sind, bei denen wenigstens eine Begrenzung von einem überwindbaren Anschlagmittel erfolgt, ist zur Verbesserung vorgeschlagen, daß am Handgriff im Bereich des Griffkörpers eine Anschlagtaste vorgesehen ist, mit der das Anschlagmittel zur Begrenzung der Gesamtdurchflußmenge vom Benutzer lösbar ist.

## Beschreibung

Die Erfindung betrifft eine Betätigungseinrichtung für ein Einhebelmischventil, insbesondere für Wasserleitungen im Sanitärbereich, mit einem in zwei Freiheitsgraden bewegbaren Handgriff, der mit einein Ventilglied zur Bestimmung des Mischungsverhältnisses und der Gesamtdurchflußmenge über einen Steilhebel verbunden ist, wobei Anschlagmittel zur Bewegungsbegrenzung des Ventilglieds vorgesehen sind, bei denen wenigstens eine Begrenzung von einem überwindbaren Anschlagmittel erfolgt.
Eine derartige Einrichtung ist aus der Druckschrift EP 0 662 577 A1 bekannt. Bei dieser Einrichtung sind überwindbare Anschlagmittel in Form von federnd in die Schwenkbahn des Stellhebels ragende Knaggen vorgesehen, die bei der Betätigung durch eine erhöhte Krafteinlenkung in den Handgriff vom Benutzer überwunden werden können. Hierbei kann es jedoch vorkommen, daß von gebrechlichen Personen, Kindern, etc. die erhöhte Krafteinlenkung zur Überwindung des Anschlags nur mit Mühe oder gar nicht aufgebracht werden kann. Andererseits kann nicht völlig ausgeschlossen werden, daß von besonders kräftigen Personen bei der Öffnungsbewegung der Anschlag des Mischventils unbeabsichtigt überwunden werden kann, so daß der erwünschte Wasserspareffekt nicht erreicht wird.
Ferner ist aus der EP 0 426 639 A1 eine Betätigungseinrichtung für ein Mischventil bekannt, bei der der Anschlag zur Begrenzung der Gesamtdurchflußmenge durch ein Drücken oder ein Ziehen des gesamten Handgriffs, also in einem dritten Freiheitsgrad des Handgriffs, überwindbar ist. Bei dieser Ausbildung findet zwischen dem Handgriff und dem Stellhebel des Ventils immer eine Bewegung zur Bedienung des überwindbaren Anschlags statt. Beim Gebrauch dieser Einrichtung ist daher zu erwarten, daß sich die Fertigungstoleranzen und zunehmend der Verschleiß unangenehm im Hebelspiel bzw. im Spiel zwischen Handgriff und Ventilglied bemerkbar machen. Darüber hinaus ist es bei dieser Betätigungseinrichtung nicht unmittelbar ersichtlich, in welcher Weise der lösbare Anschlag überwunden werden kann.

Der Erfindung liegt die Aufgabe zugrunde, die im Oberbegriff des Anspruchs 1 angegebene Einrichtung unter Beibehaltung einer starren Verbindung zwischen Stellhebel und Handgriff so auszubilden, daß der überwindbare Anschlag vom Benutzer durch eine gesonderte Betätigung lösbar ist. Hierbei gehört es mit zur Aufgabe, ein über einen relativ langen Zeitraum gleichmäßig wirkende, verschleißarme Ventilbetätigungseinrichtung zu schaffen, mit der eine Einsparung von Wasser und Energie möglich wird.

Diese Aufgabe wird erfindungsgemäß dadurch gelöst, daß am Handgriff im Bereich des Griffkörpers eine Anschlagtaste vorgesehen ist, mit der das Anschlagmittel zur Begrenzung der Gesamtdurchflußmenge vom Benutzer lösbar ist.

Mit diesen Maßnahmen wird insbesondere erreicht, daß die feste Verbindung zwischen dem Handgriff und dem Stellhebel des Ventils in vollem Umfang aufrechterhalten werden kann, und andererseits die lösbare Anschlagausbildung sowohl optisch als auch haptisch für den Benutzer verständlich und bedienungsfreundlich ist. Weitere Ausgestaltungen der Erfindung sind in den Ansprüchen 2 bis 25 angegeben.

Ausführungsbeispiele der Erfindung sind in der Zeichnung dargestellt und werden im folgenden erläutert. Es zeigt
- Fig. 1: ein Einhebelmischventil im Längsschnitt;
- Fig. 2: das in Fig. 1 gezeigte Einhebelmischventil in Draufsicht;
- Fig. 3: einen Teil des in Fig. 2 dargestellten Einhebelmischventils in der Schnittebene III;
- Fig. 4: die in Fig. 1 gezeigte Anschlagtaste in Perpektivdarstellung;
- Fig. 5: einen Teil des in Fig. 1 dargestellten Einhebelmischventils in halb geöffneter Durchflußstellung, wobei der Anschlagkörper am Anschlagring anliegt;
- Fig. 6: das in Fig. 5 gezeigte Einhebelmischventil mit betätigter Anschlagtaste, wobei der Anschlagkörper aus dem Bereich des Anschlagrings ausgeschwenkt ist;
- Fig. 7: das in Fig. 6 gezeigte Einhebelmischventil in voll geöffneter Durchflußstellung mit aus dem Anschlagring ausgeschwenkten Anschlagkörper;
- Fig. 8: ein anderes Ausführungsbeispiel eines Einhebelmischventils in Perspektivansicht;
- Fig. 9: einen Teil des in Fig. 8 dargestellten Einhebelmischventils im Längsschnitt;
- Fig. 10: einen Teil eines weiteren Einhebelmischventils mit einer an einem Schieber ausgebildeten Betätigungstaste in Absperrstellung;
- Fig. 11: das in Fig. 10 gezeigte Einhebelmischventil in halb geöffneter Stellung, wobei der Anschlagkörper an der Stirnseite eines Temperaturanschlagrings anliegt;
- Fig. 12: das in Fig. 11 gezeigte Einhebelmischventil mit betätigter Anschlagtaste in der voll geöffneten Durchflußstellung;
- Fig. 13: einen Teil des in Figur 1 gezeigten Einhebelmischventils mit einer geänderten Betätigungseinrichtung;
- Fig. 14: das in Figur 13 gezeigte Einhebelmischventil in Draufsicht;
- Fig. 15: die in Figur 13 gezeigte Anschlagtaste in Perspektivdarstellung;
- Fig. 16: die in Figur 13 gezeigte Elastomerabdeckung in vergrößerter Darstellung;
- Fig. 17: die in Figur 16 gezeigte Elastomerabdeckung in Unteransicht;
- Fig. 18: den in Figur 13 gezeigten Anschlagring in der Schnittebene XVIII der Figur 19;
- Fig. 19: den in Figur 18 gezeigten Anschlagring in Draufsicht.

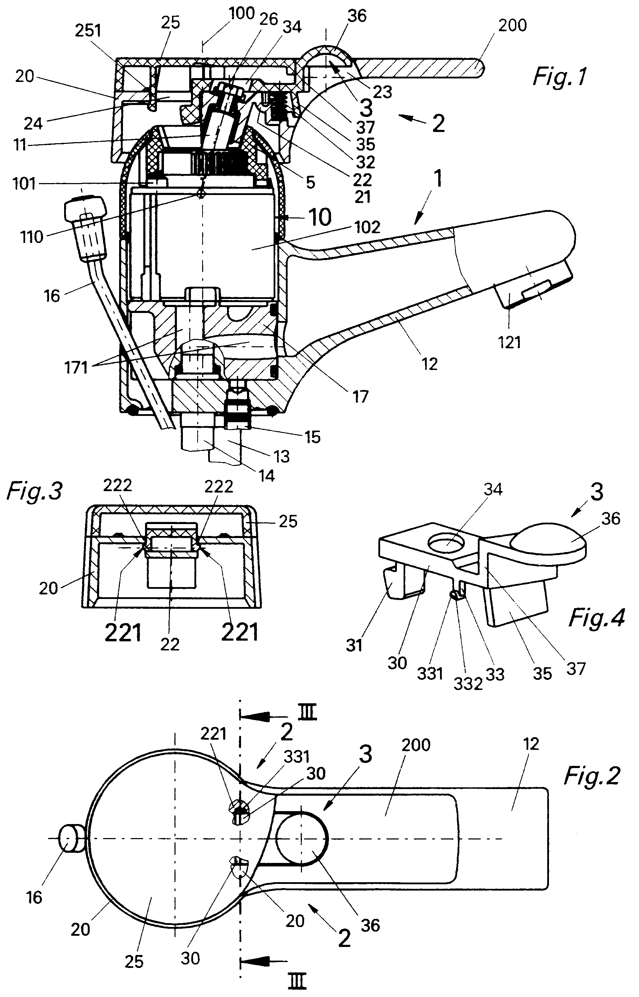

Der Einfachheit halber sind bei den Ausführungsbeispielen in der Zeichnung gleiche oder entsprechende Elemente mit jeweils gleichen Bezugszeichen versehen.
Bei den Figuren 1 bis 7 ist ein Einhebelmischventil 1 für einen Waschtisch (in der Zeichnung nicht dargestellt) gezeigt. In dem Einhebelmischventil 1 sind Zulaufrohre 13,14 für Kalt- und Warmwasser angeschlossen, die über ein Einsatzstück 17 mit einem im Einhebelmischventil 1 angeordneten Mischventil 10 verbunden sind. Das in dem Mischventil 10 erzeugbare Mischwasser wird über einen Kanal 171 in einen Auslaufarm des Einhebelmischventils abgegeben. Am Endbereich des Auslaufarms 12 kann dann das Wasser über ein Auslaufmundstück 121 als Freistrahl aus dem Einhebelmischventil 1 austreten.
Die einzelnen Ventilelemente des Mischventils 10 sind dabei in einem Kartuschengehäuse 102 gekapselt angeordnet, wobei das Kartuschengehäuse 102 mit Befestigungsschrauben 101 zusammen mit dem Einsatzstück 17 an dem Einhebelmischventil 1 verschraubt ist.
Am vorstehenden Endbereich des Mischventils 10 ist an der Stirnseite ein um eine Mittelachse 100 drehbarer und um eine senkrecht zu der Mittelachse 100 angeordnete Achse 110 verschwenkbarer Stellhebel 11 herausgeführt.
An dem Stellhebel 11 ist ein Handgriff 2 mit einem einen umlaufenden Kragen aufweisenden Hebelkopf 20 aufgesteckt, an welchem ein Griffkörper 200 für die Bedienung seitlich angeordnet ist. Der Handgriff 2 ist in der Stecklage von einer Befestigungsschraube 26 gesichert. Wird mit dem Handgriff 2 der Stellhebel 11 um die Achse 110 verschwenkt, so wird dabei in Abhängigkeit von dem Schwenkwinkel die Gesamtdurchflußmenge des Wassers im Mischventil 10 bestimmt. Mit einer Drehung des Handgriffs 2 um die Mittelachse 100 kann dagegen in Abhängigkeit vom Drehwinkel das Mischungsverhältnis von Kalt- und Warmwasser und somit die Temperatur des austretenden Mischwassers im Mischventil 10 eingestellt werden.
Zur Befestigung des Einhebelmischventils 1 an einem Waschtisch ist außerdem ein Befestigungsbolzen 15 vorgesehen, mit dem in bekannter Weise das Einhebelmischventil 1 mit Hilfe von nicht dargestellten Unterlegscheiben und einer Mutter an dem Wasch- oder Spültisch befestigbar ist. Außerdem ist in dem Einhebelmischventil 1 ein Betätigungsgestänge 16 für ein Ablaufventil in dem nicht dargestellten Waschtisch vorgesehen.

In dem Handgriff 2 ist außerdem eine Anschlagtaste 3 angeordnet. Die Anschlagtaste 3 besteht aus einer im Querschnitt etwa U-förmig ausgebildeten Wippe 30, an dessen einen Endbereich eine Wölbung 36 für die Betätigung ausgebildet ist, während auf dem gegenüberliegenden Endbereich ein Anschlagkörper 31 angeformt ist, wie es insbesondere aus Fig. 1 und Fig. 4 zu entnehmen ist. Die Wippe 30 ist hierbei am Endbereich, an dem die Wölbung 36 angeordnet ist, mit einer Verkröpfung 37 versehen, wobei zusätzlich in diesem Bereich eine Schürze 35 angeformt ist. Zwischen der Schürze 35 und dem Anschlagkörper 31 ist an den U-Schenkeln jeweils eine Lasche 33 angeformt, an deren Endbereich zylindrische Zapfen 331 angeformt sind, die an der vorstehenden Stirnseite eine Abschrägung 332 aufweisen, wie es insbesondere aus Fig. 4 zu entnehmen ist. In der Einbaulage faßt die Anschlagtaste 3 mit den Zapfen 331 in eine rinnenförmige Aufnahme 22 des Hebelkopfes 20, wie es insbesondere aus Fig. 3 zu entnehmen ist. Damit die Anschlagtaste 3 in der Stecklage im Hebelkopf 20 gehalten ist, sind die Laschen 33 federnd ausgebildet, so daß die Anschlagtaste 33 in die Aufnahme 22 eingesprengt werden kann. Hierbei fassen die Zapfen 331 in Radialöffnungen 221 im Hebelkopf 20 ein. Zur leichten Montage der Anschlagtaste sind hierzu an den Zapfen 331 die Abschrägungen 332 ausgebildet, und außerdem am Hebelkopf 20 entsprechende Abschrägungen 222 vorgesehen, wie es insbesondere aus Fig. 3 der Zeichnung zu entnehmen ist.
Der vordere Bereich der Anschlagtaste 3 mit der kugelförmigen Wölbung 36 ist von einer Ausnehmung 23 im Griffkörper 200 aufgenommen, während der Anschlagkörper 31 durch eine Öffnung 24 im Hebelkopf 20 hindurchgeführt ist und mit einem auf einem im Durchmesser verringerten Ansatz der Mischventilkartusche 102 angeordneten Anschlagring 5 zusammenwirkt. Damit die Wölbung 36 der Anschlagtaste 3 im unbetätigten Zustand aus dem Handgriff 2 vorsteht, und die Anschlagtaste 3 in die Anschlagposition geschwenkt ist, ist im Hebelkopf 20 in einer Ausnehmung eine Feder 32 angeordnet, die von vorne von der Schürze 35 verdeckt ist. Oberhalb des Hebelkopfes 20 ist zur Verkleidung der Wippe 30 der Anschlagtaste 3 eine Abdeckhaube 25 vorgesehen, die mit Rastzungen 251 versehen ist. Die Rastzungen 251 sind federnd ausgebildet, und greifen in der Stecklage durch die Öffnung 24 hindurch und haltern damit die Abdeckhaube 25 an dem Hebelkopf 20. Außerdem ist die Wippe 30 mit einem Durchbruch 34 versehen, der so plaziert ist, daß nach Abnahme der Abdeckhaube 25 die Befestigungsschraube 26 für die Befestigung des Handgriffs 2 am Stellhebel 11 zugängig ist. Die Anschlagtaste 3, bestehend aus der Wölbung 36, der Wippe 30, dem Anschlagkörper 31, der Schürze 35 sowie den Laschen 33 mit den Zapfen 331, ist einstückig im Spritzguß aus Kunststoff hergestellt. Auch die Abdeckhaube 25 mit den Rastzungen 251 ist aus Kunststoff im Spritzgießverfahren hergestellt.
Das Kartuschengehäuse 102 mit dem Einsatzstück 17 ist in dem Einhebelmischventil 1 in einer derartigen Drehstellung angeordnet, daß der Handgriff 2 in der Kaltwasseranschlagstellung des Mischventils 10 parallel zum Auslaufarm 12 des Einhebelmischventils 1 angeordnet ist, wie es insbesondere aus Fig. 2 der Zeichnung zu entnehmen ist. Hiermit kann zusätzlich eine Energieeinsparung erzielt werden, da unbeabsichtigtes Zapfen von Warmwasser weitgehend vermieden werden kann. Außerdem kann in dem Anschlagkörper 31 eine Stellschraube angeordnet werden, mit der die Anschlagposition einstellbar ist. Die Stellschraube kann hierbei mit Gewinde in dem Anschlagkörper 31 angeordnet werden, wobei dann durch ein entsprechendes Herausschrauben gegen den Hebelkopf 20 (Zapfen 21) die Anschlagposition individuell verschieden auf ca. 50 % der maximalen Auslaufmenge einstellbar ist.

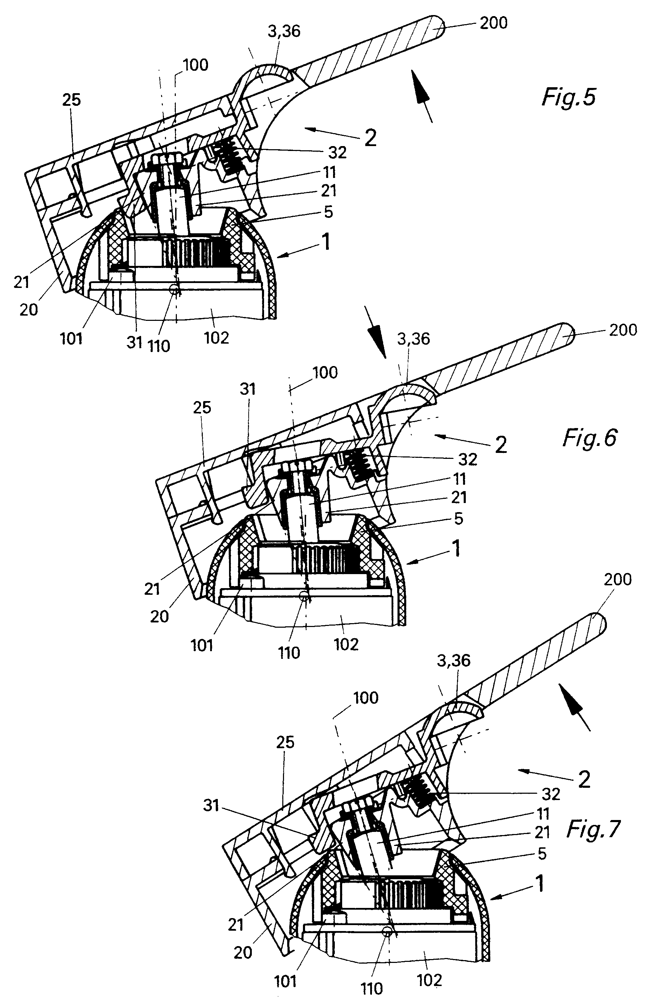

Die Betätigungseinrichtung des vorstehend beschriebenen Einhebelmischventils 1 hat folgende Funktionsweise:
In der in Fig. 1 dargestellten Stellung des Handgriffs 2 befindet sich das Mischventil 10 in der Kaltwasserstellung in Absperrposition. Wird nun gemäß Fig. 5 der Handgriff 2 in Pfeilrichtung angehoben, so gelangt der Anschlagkörper 31 an der Innenwandung des Anschlagrings 5 zur Anlage, wenn ein Öffnungsgrad von etwa 50% der maximal möglichen Gesamtdurchflußmenge erreicht ist. Eine weitergehende Schwenkbewegung des Handgriffs 2 wird von dem Anschlagkörper 31, der formschlüssig an der Innenseite des Anschlagrings 5 anliegt, unterbunden.
Wird nun gemäß Fig. 6 die Anschlagtaste 3 an der Wölbung 36 vom Benutzer in Pfeilrichtung entgegen der Kraft der Feder 32 gedrückt, so wird der an dem gegenüberliegenden Endbereich der Wippe 30 angeformte Anschlagkörper 31 aus dem Bereich des Anschlagrings 5 herausgeschwenkt, so daß hiermit der im halben Öffnungsgrad wirksame Anschlag gelöst wird und vom Benutzer der Handgriff 2 in die maximale Öffnungsposition, wie es in Fig. 7 gezeigt ist, verschwenkt werden kann. Hierbei gleitet der Anschlagkörper auf der Stirnseite des Anschlagrings, so daß die Wölbung 36 in der eingedrückten Position verharrt. Wird nun der Handgriff 2 entgegen der Pfeilrichtung in Fig. 7 zurückbewegt, so drückt die Feder 32 die Anschlagtaste 3 mit dem Anschlagkörper 31 nach einer Drosselung um 50% wieder in seine Anschlagposition - wie in Fig. 5 dargestellt - zurück und verhindert damit wiederum ein unbeabsichtigtes Einstellen der maximalen Ausflußmenge.
Unabhängig davon, ob der Anschlagkörper 31 der Anschlagtaste 3 in den Anschlagbereich des Anschlagrings 5 eingeschwenkt ist oder nicht, kann durch eine Drehbewegung des Handgriffs 2 um die Mittelachse 100 die Mischwassertemperatur von der Kaltwasserposition zunehmend bis in die Heißwasserposition und zurück wahlweise eingestellt werden.

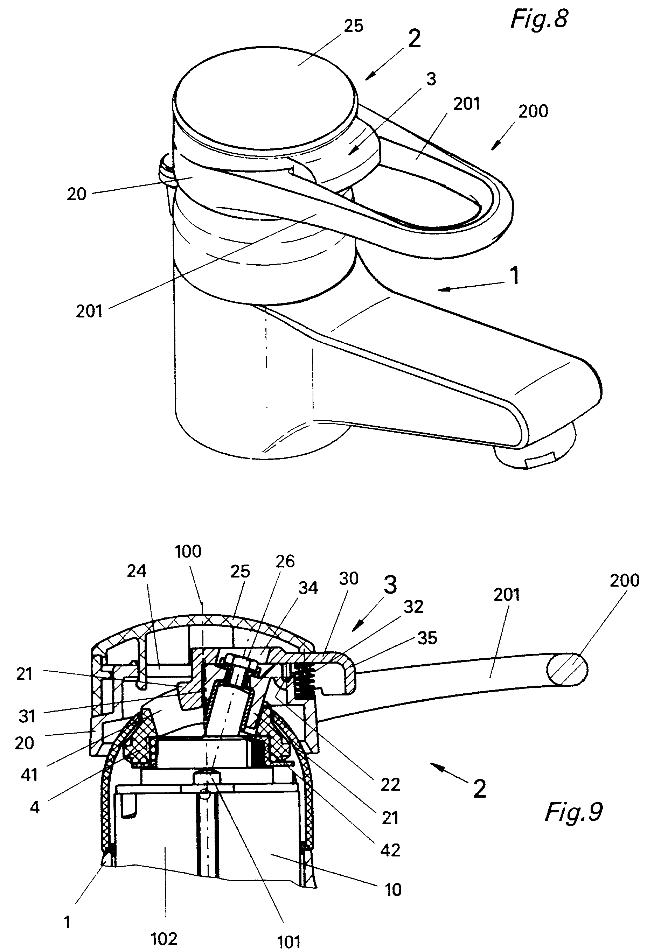

In den Fig. 8 und 9 der Zeichnung ist ein abgewandeltes Einhebelmischventil 1 dargestellt. Der Griffkörper 200 des Handgriffs 2 ist hierbei als Bügel ausgebildet, der von zwei parallel laufenden Armen 201 gebildet ist, die am vorstehenden Endbereich bogenförmig miteinander verbunden und andererseits tangential in den Hebelkopf 20 eingeführt sind. Zwischen den beiden Armen 201 ist am Seitenbereich des Hebelkopfes 20 die Anschlagtaste 3 ausgebildet. Die Anschlagtaste 3 entspricht im wesentlichen der in den Ausführungsbeispielen 1 bis 7, wobei jedoch keine besondere Wölbung 36 vorgesehen ist und das vordere Ende der Wippe 30 mit der Schürze 35 den Betätigungsbereich bildet.
Die Anschlagtaste 3 wirkt hierbei mit einem Temperaturanschlagring 4 zusammen, wobei der Hebelkopf 20 mit einem Zapfen 21 quadratischen oder rechteckigen Querschnitts in eine Schwenkbahn 41 einfaßt, so daß bei einer Drehbewegung um die Mittelachse 100 der Temperaturanschlagring 4 synchron mit dem Ventilglied eine Drehbewegung ausführt. Der Temperaturanschlagring 4 ist hierbei auf einem Steckring 42 begrenzt drehbar angeordnet, wobei der Steckring 42 in verschiedenen Drehstellungen auf dem im Durchmesser verringerten Ansatz des Handgriffs 2 drehfest aufsteckbar ist, wie es aus der deutschen Patentschrift DE 36 07 349 C2 bekannt ist.
Das Mischventil 10 ist hierbei im Einhebelmischventil 1 so angeordnet, daß in einer mittleren Mischstellung des Mischventils 10 der Handgriff 2 mit dem Griffkörper 200 parallel zum Auslaufarm 12 des Einhebelmischventils 1 angeordnet ist. Selbstverständlich kann bei dieser Ausbildung das Mischventil 10 in dem Einhebelmischventil 1 auch so angeordnet werden, daß in der Kaltwasserstellung des Mischventils 10 der Handgriff 2 mit dem Griffkörper 200 parallel zum Auslaufarm 12 angeordnet ist.

Die Funktionsweise dieses Einhebelmischventils 1 entspricht im übrigen dem in Fig. 1 bis 7 dargestellten.

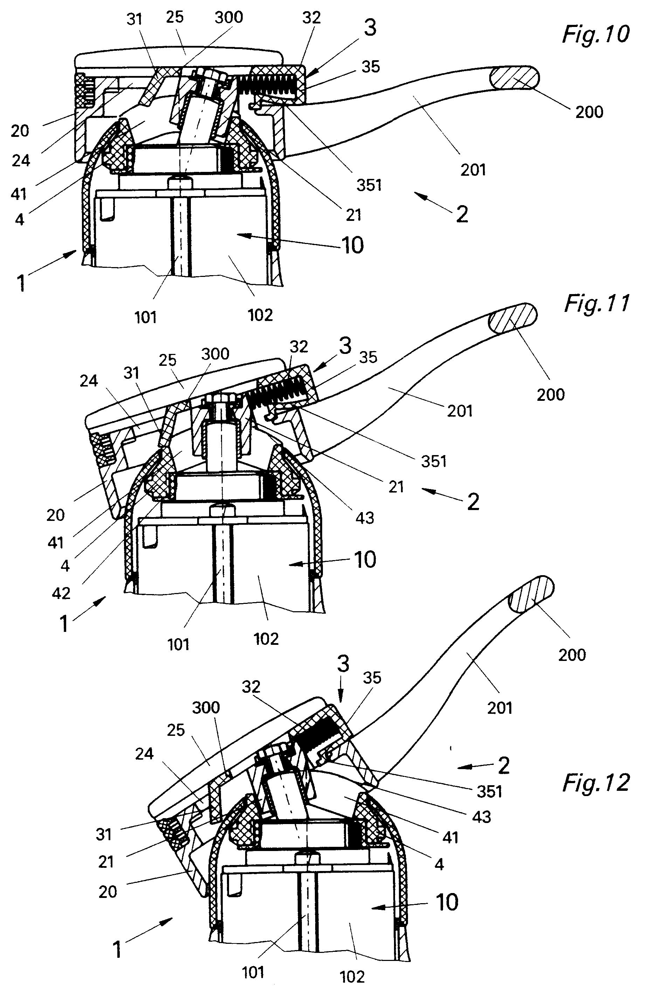

In den Fig. 10 bis 12 der Zeichnung ist eine zu den Fig. 8 und 9 abgewandelte Ausbildung der Anschlagtaste 3 gezeigt. Die Anschlagtaste 3 ist hierbei mit einem Schieber 300 ausgebildet. Der Schieber 300 ist parallel zu den Armen 201 am Hebelkopf 20 verschiebbar gelagert. Der Angriffsbereich für die Betätigung ist von der stirnseitig ausgebildeten Schürze 35 geformt, an der sich andererseits die Feder 32 abstützt. An der Schürze 35 ist außerdem ein Schnapphaken 351 ausgebildet, der die Anschlagtaste 3 in eingedrückter Position hält, wie es in Fig. 12 gezeigt ist. Beim Schließvorgang wird der Schnapphaken 351 durch eine Kante 43 des Temperaturanschlagrings 4 aus seiner Rastposition ausgelenkt, so daß danach die Feder 32 die Anschlagtaste 3 wiederum aus dem Hebelkopf 20 herausschiebt. Der Anschlagkörper 31 wirkt hierbei mit seiner vorstehenden Stirnseite mit einer Stirnseite des Temperaturanschlagrings 4 zusammen.
Die vorstehend beschriebene Betätigungseinrichtung des Einhebelmischventils 1 hat folgende Funktionsweise:
Das Mischventil 10 befindet sich in der in Fig. 10 gezeigten Position des Handgriffs 2 in der Schließstellung, wobei der Anschlagkörper 31 sich in seiner Anschlagposition befindet. Wird nun der Handgriff 2 am Griffkörper 200 angehoben, so gelangt der Anschlagkörper 31 mit seiner Stirnseite an der Stirnseite des Temperaturanschlagrings 4 in der halb geöffneten Position des Mischventils 10 zur Anlage und verhindert eine weitere Öffnungsbewegung, wie es in Fig. 11 dargestellt ist. Wird nun die Anschlagtaste 3 in Pfeilrichtung in den Hebelkopf 20 entgegen der Kraft der Feder 32 eingeschoben, so gelangt der Schnapphaken 31 in seine Rastposition und hält die Anschlagtaste 3 in der eingedrückten Position, wie es in Fig. 12 dargestellt ist. Nunmehr kann der Handgriff 2 am Griffkörper 200 weiter angehoben werden, bis die maximale Öffnungsposition des Mischventils 10 erreicht ist, wie es in Fig. 12 dargestellt ist. Wird danach mit dem Griffkörper 200 das Mischventil 10 wieder in seine Schließstellung bewegt, so gelangt der Schnapphaken 351 mit seinem Seitenbereich an der Kante 43 des Temperaturanschlagrings 4 zur Anlage und wird dadurch aus seiner Rastposition ausgelenkt, so daß die Feder 32 die Anschlagtaste 3 mit dem Anschlagkörper 31 wieder in ihre Anschlagposition drückt, wie es in Fig. 10 und 11 dargestellt ist. In der Rastposition ist eine Gesamtdurchflußmengeneinstellung von etwa 10 bis 100% möglich.

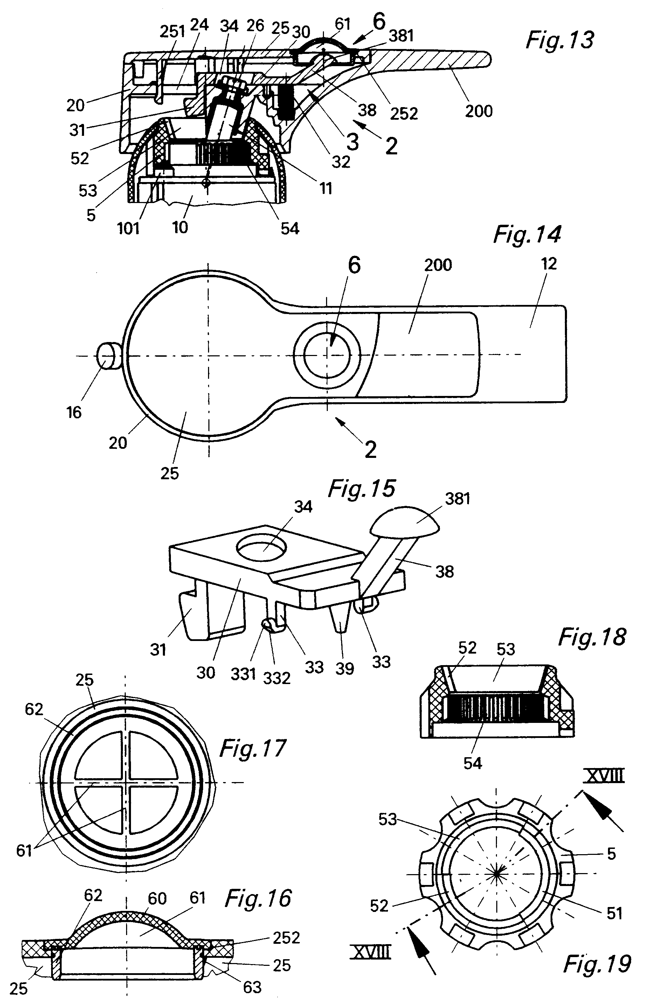

In den Figuren 13 bis 18 der Zeichnung ist eine zu den Figuren 1 bis 7 abgewandelte Ausbildung dargestellt. Die Anschlagtaste 3 ist hierbei mit der Wippe 30 stirnseitig auf dem Hebelkopf 20 angeordnet, wobei an der Wippe 30 ein Arm 38 mit einem gewölbten Kopf 381 angeformt ist. Die Stirnseite des Hebelkopfes 20 und ein Teil des Griffkörpers 200 sind hierbei mit einer Abdeckhaube 25 versehen, wie es aus Figur 13 und 14 ersichtlich ist. In der Abdeckhaube 25 ist im Bereich des Griffkörpers 200 eine Öffnung 252 ausgebildet, die von einer Elastomerabdeckung 6 verschlossen ist. Die Elastomerabdeckung 6 ist von einer kalottenförmig vorgewölbten Membran 60 mit kreuzweise angeordneten Verstärkungsrippen 61 sowie einem Sprengring 62 mit Rastnasen 63 gebildet, wie es insbesondere aus Figur 16 und 17 zu entnehmen ist. Die Membran 60 ist hierbei mit dem Sprengring 62 im Zweikomponentenspritzgießverfahren (Verbundspritzguß) einstückig hergestellt, wobei die Membran 60 aus einem thermoplastischen Elastomer und der Sprengring 62 aus Polypropylen besteht.

Der Arm 38 der Wippe 30 ragt mit seinem Kopf 381 in das Zentrum der Öffnung 252 und liegt bei aufgesetzter Abdeckhaube 25 an der Innenseite im Bereich der Verstärkungsrippen 61 an. Wenn nun der Benutzer auf die Elastomerabdeckung 6 drückt, wird die Wippe 30 entgegen der Kraft der auf einem Dorn 39 geführten Feder 32 ausgelenkt und der Anschlagkörper 31 aus seiner Anschlagposition herausgeschwenkt, so daß danach die volle Öffnung des Mischventils ermöglicht ist, wie es bereits im Ausführungsbeispiel gemäß Figur 1 bis 7 beschrieben ist. Mit der Elastomerabdeckung 6 wird sicher ein Eindringen von Fremdkörpern, Putzmitteln etc. im Bereich der Anschlagtaste 3 verhindert, so daß ein störungsfreier, verschleißarmer Betrieb über einen relativ langen Zeitraum gewährleistet ist.

Zusätzlich ist bei diesem Ausführungsbeispiel ein Anschlagring 5 mit drei unterschiedlichen Anschlagbereichen 51,52,53 vorgesehen, wie es insbesondere aus Figur 18 und 19 zu entnehmen ist. Der Anschlagring 5 kann hierbei mit seiner Verzahnung 54 auf dem Mischventil 10 in der jeweils gewünschten Drehstellung aufgesteckt werden, so daß einer der drei unterschiedlich gestuften Anschlagbereiche 51,52,53 wählbar ist.

## Patentansprüche

1. Betätigungseinrichtung für ein Einhebelmischventil, insbesondere für Wasserleitungen im Sanitärbereich mit einem in zwei Freiheitsgraden bewegbaren Handgriff, der mit einem Ventilglied zur Bestimmung des Mischungsverhältnisses und der Gesamtdurchflußmenge über einen Steilhebel verbunden ist, wobei Anschlagmittel zur Bewegungsbegrenzung des Ventilglieds vorgesehen sind, bei denen wenigstens eine Begrenzung von einem überwindbaren Anschlagmittel erfolgt, dadurch gekennzeichnet, daß am Handgriff (2) im Bereich des Griffkörpers (200) eine Anschlagtaste (3) vorgesehen ist, mit der das Anschlagmittel zur Begrenzung der Gesamtdurchflußmenge vom Benutzer lösbar ist.

2. Betätigungseinrichtung nach Anspruch 2, dadurch gekennzeichnet, daß die Anschlagtaste (3) eine Wippe (30) mit einem Betätigungsbereich aufweist, an der andererseits ein Anschlagkörper (31) ausgebildet ist, der mit einer Betätigung der Anschlagtaste (3) aus seiner Anschlagposition zwischen den um eine Achse (110) bewegbaren Handgriff (2) und einen hierzu unbeweglichen Teil herausschwenkbar ist.

3. Betätigungseinrichtung nach Anspruch 1, dadurch gekennzeichnet, daß die Anschlagtaste (3) einen Schieber (300) mit einem Betätigungsbereich aufweist, an dem andererseits ein Anschlagkörper (31) ausgebildet ist, wobei der Schieber (300) mit der Anschlagtaste (3) etwa parallel zum Handgriff (2) verschiebbar ist, so daß der Anschlagkörper (31) aus seiner Anschlagposition zwischen dem um eine Achse (110) bewegbaren Handgriff (2) und einen hierzu unbeweglichen Teil auslenkbar ist.

4. Betätigungseinrichtung nach wenigstens einem der Ansprüche 1 bis 3, dadurch gekennzeichnet, daß die Anschlagtaste (3) von einer Feder (32) in Richtung auf die Anschlagposition des Anschlagkörpers (31) gedrückt ist.

5. Betätigungseinrichtung nach wenigstens einem der Ansprüche 1 bis 4, dadurch gekennzeichnet, daß der Handgriff (2) von einem Griffkörper 200 und einem Hebelkopf (20) gebildet ist, wobei die Anschlagtaste (3) im Übergangsbereich von dem Griffkörper (200) und dem Hebelkopf (20) angeordnet ist.

6. Betätigungseinrichtung nach Anspruch 5, dadurch gekennzeichnet, daß die Anschlagtaste (3) mit ihrem Betätigungsbereich im Griffkörper (200) angeordnet ist.

7. Betätigungseinrichtung nach Anspruch 5, dadurch gekennzeichnet, daß der Griffkörper (200) des Handgriffs (2) von zwei etwa parallel geführten Armen (201) gebildet ist, die am vorstehenden Endbereich bogenförmig verbunden sind, wobei die Anschlagtaste (3) an der Vorderseite des Hebelkopfes (20) zwischen den beiden Armen (201) angeordnet ist.

8. Betätigungseinrichtung nach wenigstens einem der Ansprüche 1 bis 7, dadurch gekennzeichnet, daß der Anschlagkörper (31) an einem Temperaturanschlagring (4), der synchron mit dem Ventilglied drehbar ist, bei der Durchflußmengenbegrenzung zur Anlage gelangt.

9. Betätigungseinrichtung nach Anspruch 8, dadurch gekennzeichnet, daß der Anschlagkörper (31) in der Anschlagposition stirnseitig in eine diagonal ausgebildete Schwenkbahn (41) des Temperaturanschlagrings (4) einfaßt.

10. Betätigungseinrichtung nach wenigstens einem der Ansprüche 1 bis 7, dadurch gekennzeichnet, daß das Mischventil (10) in ein Kartuschengehäuse (102) angeordnet ist, wobei auf dem Kartuschengehäuse (102) ein Anschlagring (5) vorgesehen ist, an dessen Innenwandung und/oder Stirnseite der Anschlagkörper (31) zur Anlage gelangt.

11. Betätigungseinrichtung nach Anspruch 2 und/oder einem weiteren Anspruch, dadurch gekennzeichnet, daß die Wippe (30) mit ihrer Drehachse in einer rinnenförmigen Aufnahme (22) abgestützt ist, wobei die Anschlagtaste (3) mit dem den Betätigungsbereich tragenden Teil der Wippe (30) in eine entsprechende Ausnehmung (23) im Griffkörper (200) des Handgriffs (2) aufgenommen ist.

12. Betätigungseinrichtung nach wenigstens einem der Ansprüche 2 bis 11, dadurch gekennzeichnet, daß die Wippe (30) im Querschnitt etwa U-förmig ausgebildet ist, wobei an den U-Schenkeln zwei Laschen (33) angeformt sind, an deren vorstehendem Endbereich jeweils ein etwa zylindrischer Zapfen (331) ausgebildet ist, die in der Stecklage der Anschlagtaste (3) von der im Hebelkopf (20) ausgebildeten Aufnahme (22) abgestützt sind.

13. Betätigungseinrichtung nach Anspruch 12, dadurch gekennzeichnet, daß die Zapfen (331) an elastisch federnd ausgebildeten Laschen (33) angeformt und jeweils an der Außenseite eine Abschrägung (332) aufweisen, so daß die Zapfen (331) in der Stecklage in Radialöffnungen (221) des Hebelkopfes (20) einschnappen und eine schwenkbare Verrastung bewirken.

14. Betätigungseinrichtung nach wenigstens einem der Ansprüche 1 bis 13, dadurch gekennzeichnet, daß die Anschlagtaste (3) mit der Wippe (30) oder dem Schieber (300) oberhalb des Hebelkopfes (20) angeordnet ist, derart, daß der Anschlagkörper (31) durch eine Öffnung (24) des Hebelkopfes (20) in seine Anschlagposition greift, wobei der obere Bereich des Hebelkopfes (20) von einer Abdeckhaube (25) verschlossen ist, an der die Anschlagtaste (3) in der Anschlagposition etwa anliegt.

15. Betätigungseinrichtung nach Anspruch 14, dadurch gekennzeichnet, daß die Wippe (30) oder der Schieber (300) einen Durchbruch (34) aufweist, durch den eine Befestigungsschraube (26) für die Befestigung des Handgriffs (2) an dem Stellhebel (11) zugänglich ist.

16. Betätigungseinrichtung nach einem der Ansprüche 1 bis 15, dadurch gekennzeichnet, daß die Anschlagtaste (3) mit der Wippe (30) oder dem Schieber (300) sowie dem Anschlagkörper (31) einstückig aus Kunststoff im Spritzgießverfahren hergestellt ist.

17. Betätigungseinrichtung nach einem der Ansprüche 4 bis 16, dadurch gekennzeichnet, daß an der Betätigungstaste (3) eine Schürze (35) zum Schutze und zur Sicherung der Feder (32) angeformt ist.

18. Betätigungseinrichtung nach wenigstens einem der Ansprüche 1 bis 17, dadurch gekennzeichnet, daß die Anschlagtaste (3) für die Betätigung durch den Benutzer eine Wölbung (36) aufweist, die vorzugsweise kalottenförmig gestaltet ist.

19. Betätigungseinrichtung nach wenigstens einem der Ansprüche 1 bis 18, dadurch gekennzeichnet, daß der Einwirkungsbereich des Benutzers auf die Betätigungstaste (3) an einem eine Verkröpfung (37) aufweisenden Endbereich der Wippe (30) ausgebildet ist.

20. Betätigungseinrichtung nach wenigstens einem der Ansprüche 1 bis 19, dadurch gekennzeichnet, daß das Mischventil (10) im Einhebelmischventil (1) so angeordnet ist, daß der Griffkörper (200) des Handgriffs (2) in der Kaltwasserstellung sich parallel zum Auslaufarm (12) befindet.

21. Betätigungseinrichtung nach Anspruch 1 und/oder einem anderen Anspruch, dadurch gekennzeichnet, daß der Anschlagkörper (31) eine Stellschraube aufweist, mit der die Anschlagposition des Anschlagkörpers (31) einstellbar ist.

22. Betätigungseinrichtung nach wenigstens einem der Ansprüche 2 bis 21, dadurch gekennzeichnet, daß der Handgriff (2) eine die Stirnseite des Hebelkopfes (20) und einen Teil des Griffkörpers (200) übergreifende Abdeckhaube (25) trägt, wobei im Bereich des Griffkörpers (200) eine von einer membranartig auslenkbaren Elastomerabdeckung (6) verschlossene Öffnung (252) in der Abdeckhaube (25) ausgebildet ist, an die von der Innenseite ein an der Wippe (30) angeformter Arm (38) mit einem gewölbten Kopf (381) anliegt.

23. Betätigungseinrichtung nach Anspruch 22, dadurch gekennzeichnet, daß die Elastomerabdeckung (6) von einer kalottenförmig vorgewölbten Membran (60) mit kreuzweise angeordneten Verstärkungsrippen (61) gebildet ist, an der ein Sprengring (62) mit Rastnasen (63) angeordnet ist, so daß die Elastomerabdeckung (6) in der Stecklage die Öffnung (252) verschließt und in ihr verrastet ist.

24. Betätigungseinrichtung nach Anspruch 23, dadurch gekennzeichnet, daß die Membran (60) aus einem thermoplastischen Elastomer und der Sprengring (62) aus Polypropylen hergestellt ist, wobei die Membran (60) mit dem Sprengring (62) im Zweikomponentenspritzverfahren (Verbundspritzgießverfahren) einstückig hergestellt ist.

25. Betätigungseinrichtung nach wenigstens einem der Ansprüche 10 bis 24, dadurch gekennzeichnet, daß der Anschlagring (5) verschiedene, vorzugsweise drei, Anschlagbereiche (51,52,53) hat, wobei der Anschlagring (5) in verschiedenen Drehstellungen mit einer Verzahnung (54) auf das Mischventil (10) aufsteckbar ist, so daß verschiedene Anschlagbereiche wählbar sind.
